# EUROPÄISCHE PATENTANMELDUNG

(11) **EP 4 415 391 A1**
(43) Veröffentlichungstag der Anmeldung: **14.08.2024**
(21) Anmeldenummer: 24156045.7
(22) Anmeldetag: 06.02.2024
(51) Int. Cl.: H04R 25/00, H04R 1/10, G06F 3/01, G06F 3/16

(54) **VERFAHREN ZUM BETRIEB EINES HÖRINSTRUMENTS UND HÖRSYSTEM MIT EINEM SOLCHEN HÖRINSTRUMENT**

(30) Priorität: 09.02.2023 DE 102023201075
(71) Anmelder: Sivantos Pte. Ltd., Singapore 539775 (SG)
(72) Erfinder: WARMUTH, Julia, 91058 Erlangen (DE); KUKLA, Christoph, 91058 Erlangen (DE); SCHÖN, Sven, 91058 Erlangen (DE)
(74) Vertreter: FDST Patentanwälte

(57) **Zusammenfassung**

Es werden ein Verfahren zum Betrieb eines im oder am Ohr eines Nutzers getragenen Hörinstruments (4) und ein Hörsystem (2) mit einem solchen Hörinstrument (4) angegeben. Im Betrieb des Hörinstruments (4) kann durch einen mehrfachen, insbesondere zweifachen Fingertipp auf das Hörinstrument (4) eine Aktion des Hörinstruments (4) oder einer mit diesem verbundenen externen Funktionseinheit (6) ausgelöst werden. In einem Mehrfachtipp-Testschritt wird an den Nutzer eine Mehrfachtipp-Aufforderung zur Ausführung des mehrfachen Fingertipps ausgegeben. Mittels eines in dem Hörinstrument (4) integrierten Sensors, insbesondere eines Beschleunigungssensors (28) oder Gyrosensors, wird ein Messsignal (M) erfasst, das eine Signatur des ausgeführten mehrfachen Fingertipps enthält. Das Messsignal (M) wird mit einem hinterlegten Mehrfachtipp-Muster für den mehrfachen Fingertipp verglichen. An den Nutzer wird eine Rückmeldung ausgegeben, ob die in dem Messsignal (M) enthaltene Signatur dem Mehrfachtipp-Muster entspricht.

## Beschreibung

Die Erfindung bezieht sich auf ein Verfahren zum Betrieb eines im oder am Ohr eines Nutzers getragenen Hörinstruments. Die Erfindung bezieht sich weiterhin auf ein Hörsystem mit einem solchen Hörinstrument.

Als Hörinstrument wird allgemein ein elektronisches Gerät bezeichnet, dass das Hören einer das Hörinstrument tragenden Person (die nachfolgend als "Träger" oder "Nutzer" bezeichnet ist) unterstützt. Insbesondere bezieht sich die Erfindung auf Hörinstrumente, die dazu eingerichtet sind, einen Hörverlust eines hörgeschädigten Nutzers ganz oder teilweise zu kompensieren. Ein solches Hörinstrument wird auch als "Hörgerät" bezeichnet. Daneben gibt es Hörinstrumente, die das Hörvermögen von normalhörenden Nutzern schützen oder verbessern, zum Beispiel in komplexen Hörsituationen ein verbessertes Sprachverständnis ermöglichen sollen. Solche Geräte werden auch als "Personal Sound Amplification Products" (kurz: PSAP) bezeichnet. Schließlich fallen unter den Begriff "Hörinstrument" in dem hier verwendeten Sinn auch auf oder in dem Ohr getragene Kopfhörer (drahtgebunden oder drahtlos sowie mit oder ohne aktiver Störschallunterdrückung), Headsets, etc.

Hörinstrumente im Allgemeinen, und Hörgeräte im Speziellen, sind meist dazu ausgebildet, am Kopf und hier insbesondere ihn oder an einem Ohr des Nutzers getragen zu werden, insbesondere als Hinter-dem-Ohr-Geräte (nach dem englischen Begriff "Behind The Ear" auch als BTE-Geräte bezeichnet) oder In-dem-Ohr-Geräte (nach dem englischen Begriff "In The Ear" auch als ITE-Geräte bezeichnet). Im Hinblick auf ihre interne Struktur weisen Hörinstrumente regelmäßig mindestens einen Ausgangswandler auf, der ein zum Zweck der Ausgabe zugeführtes Ausgangs-Audiosignal in ein für den Nutzer als Schall wahrnehmbares Signal umwandelt und letzteres an den Nutzer ausgibt.

In den meisten Fällen ist der Ausgangswandler als elektro-akustischer Wandler ausgebildet, der das (elektrische) Ausgangs-Audiosignal in einen Luftschall umwandelt, wobei dieser ausgegebene Luftschall in den Gehörgang des Nutzers abgegeben wird. Bei einem hinter dem Ohr getragenen Hörinstrument ist der auch als "Hörer" ("Receiver") bezeichnete Ausgangswandler meist außerhalb des Ohrs in einem Gehäuse des Hörinstruments integriert. Der von dem Ausgangswandler ausgegebene Schall wird in diesem Fall mittels eines Schallschlauchs in den Gehörgang des Nutzers geleitet. Alternativ hierzu kann der Ausgangswandler auch in dem Gehörgang, und somit außerhalb des hinter dem Ohr getragenen Gehäuses, angeordnet sein. Solche Hörinstrumente werden (nach dem englischen Begriff "Receiver In Canal") auch als RIC-Geräte bezeichnet. Im Ohr getragene Hörinstrumente, die so klein dimensioniert sind, dass sie nach außen über den Gehörgang nicht hinausstehen, werden (nach dem englischen Begriff "Completely In Canal") auch als CIC-Geräte bezeichnet.

In weiteren Bauformen kann der Ausgangswandler auch als elektro-mechanischer Wandler ausgebildet sein, der das Ausgangs-Audiosignal in Körperschall (Vibrationen) umwandelt, wobei dieser Körperschall zum Beispiel in den Schädelknochen des Nutzers abgegeben wird. Ferner gibt es implantierbare Hörinstrumente, insbesondere Cochlear-Implantate, und Hörinstrumente, deren Ausgangswandler den Hörnerv des Nutzers direkt stimulieren.

Zusätzlich zu dem Ausgangswandler weist ein Hörinstrument häufig mindestens einen (akusto-elektrischen) Eingangswandler auf. Im Betrieb des Hörinstruments nimmt der oder jeder Eingangswandler einen Luftschall aus der Umgebung des Hörinstruments auf und wandelt diesen Luftschall in ein Eingangs-Audiosignal (d.h. ein elektrisches Signal, das eine Information über den Umgebungsschall transportiert) um. Dieses - auch als "aufgenommenes Schallsignal" bezeichnete - Eingangs-Audiosignal wird oft an ein externes Gerät weitergeleitet, z.B. zum Zweck der Aufnahme (Speicherung) oder zur Ausgabe an einen entfernten Gesprächspartner. Regelmäßig wird das Eingangs-Audiosignal aber (ggf. auch) in ursprünglicher oder verarbeiteter Form an den Nutzer selbst ausgegeben, z.B. zur Realisierung eines sogenannten Transparenzmodus bei einem Kopfhörer, zur aktiven Störschallunterdrückung oder - z.B. bei einem Hörgerät - zur Erzielung einer verbesserten Schallwahrnehmung des Nutzers.

Zudem weist ein Hörinstrument häufig eine Signalverarbeitungseinheit (Signalprozessor) auf. In der Signalverarbeitungseinheit wird das oder jedes Eingangs-Audiosignal verarbeitet (d. h. hinsichtlich seiner Schallinformation modifiziert). Die Signalverarbeitungseinheit gibt dabei ein entsprechend verarbeitetes Audiosignal (auch als "Ausgangs-Audiosignal" oder "modifiziertes Schallsignal" bezeichnet) an den Ausgangswandler und/oder an ein externes Gerät aus.

Der Begriff "Hörsystem" bezeichnet ein einzelnes Gerät oder eine Gruppe von Geräten und ggf. nicht-körperlichen Funktionseinheiten, die zusammen die im Betrieb eines Hörinstruments erforderlichen Funktionen bereitstellen. Das Hörsystem kann im einfachsten Fall aus einem einzelnen Hörinstrument bestehen. Alternativ hierzu kann das Hörsystem zwei zusammenwirkende Hörinstrumente zur Versorgung der beiden Ohren des Nutzers umfassen. In diesem Fall wird von einem "binauralen Hörsystem" gesprochen. Zusätzlich oder alternativ kann das Hörsystem mindestens ein weiteres elektronisches Peripheriegerät, zum Beispiel eine Fernbedienung, ein Ladegerät oder ein Programmiergerät für das oder jedes Hörinstrument umfassen. Bei modernen Hörsystemen ist oft anstelle einer Fernbedienung oder eines dedizierten Programmiergerätes ein Steuerprogramm, insbesondere in Form einer sogenannten App (nachfolgend als "Bedien-App" bezeichnet), vorgesehen, wobei dieses Steuerprogramm zur Installation auf einem externen Computer, insbesondere einem Smartphone oder Tablet, ausgebildet ist. Der externe Computer ist dabei regelmäßig selbst kein Teil des Hörsystems, insofern als er in der Regel unabhängig von dem Hörsystem und auch nicht von dem Hersteller des Hörsystems bereitgestellt wird.

Zur Vereinfachung der Bedienung eines solchen Hörsystems ist mitunter vorgesehen, dass der Nutzer eine oder mehrere Funktionen des Hörinstruments oder einer externen Funktionseinheit (d.h. eines Peripheriegeräts oder einer Bedien-App) durch Interaktion mit dem Hörinstrument steuern kann. Typische Beispiel für solche Funktionen sind die Annahme und die Beendung eines an der externen Funktionseinheit empfangenen Telefonats.

Aus US 10,959,008 B2 sind ein Verfahren zum Betrieb eines Hörinstruments und ein Hörsystem mit einem solchen Hörinstrument bekannt, bei dem der Nutzer Funktionen des Hörinstruments oder eines damit verbundenen Smartphones wie z.B. die Änderung der Lautstärke des ausgegebenen Signals, ein Wechsel zwischen Hörprogrammen des Hörinstruments oder die Annahme und Beendung von Telefonanrufen durch eine Tipp-Steuerung, nämlich durch einen einfachen oder mehrfachen Fingertipp auf das Hörinstrument, das Ohr oder den Kopf auslösen kann. Dabei wird mittels eines Beschleunigungssensors die auf das Hörinstrument wirkende Beschleunigung erfasst. Ein Tipp-Ereignis wird dabei erkannt, wenn die erfasste Beschleunigung bestimmte hinterlegte Kriterien erfüllt.

In der Praxis stellt sich die Verwendung einer solchen Tipp-Steuerung aber als häufig als fehleranfällig heraus. Dies liegt einerseits, dass vielen Nutzern die Gewöhnung an diese in ihrem täglichen Leben weithin unübliche Steuermethode schwerfällt; dies betrifft vor allem ältere Nutzer, Nutzer mit motorischen Einschränkungen sowie Nutzer, die wenig oder keine Erfahrung mit Eingabemitteln moderner elektronischer Geräte (Computer-Maus, Touch-Screen, etc.) haben. Zum anderen zeigt sich, dass das intuitive Tippverhalten verschiedener Nutzer starke individuelle Abweichungen aufweist. Ein hochkomplexes Problem bei der Realisierung einer herkömmlichen Tipp-Steuerung ist daher die Unterscheidung echter Tipp-Ereignisse, die von dem Nutzer bewusst zur Auslösung einer Funktion vorgenommen wurden, von Störereignissen wie unwillkürlichen Berührungen und sonstigen Erschütterungen. Negative Erkennungsfehler (False Negatives), bei denen durch die Tipp-Steuerung ein bewusst vorgenommenes Tipp-Ereignis nicht erkannt wird, und positive Erkennungsfehler (False Positives), bei denen ein Störereignis fälschlicherweise als Tipp-Ereignis erkannt wird, stehen dabei aber in einer ungünstigen Wechselbeziehung. Je unspezifischer die Kriterien für die Erkennung eines Tipp-Ereignisses ausgelegt werden, desto sicherer werden echte Tipp-Ereignisse erkannt, desto größer ist aber auch die Wahrscheinlichkeit positiver Erkennungsfehler. Andererseits steigt die Wahrscheinlichkeit negativer Erkennungsfehler, je spezifischer (strenger) die Kriterien für die Erkennung eines Tipp-Ereignisses ausgelegt sind.

Gemäß der Lehre der US 10,959,008 B2 soll dieses Problem dadurch gelöst werden, dass das individuelle Tippverhalten des Nutzers eingelernt wird. Dem Nutzer wird hierzu eine Tipp-Aufgabe gestellt, auf die hin der Nutzer einen einfachen oder mehrfachen Fingertipp ausführt. Die hinterlegten Kriterien für die Erkennung des Tipp-Ereignisses werden anhand dieses von dem Nutzer durchgeführten Fingertipps angepasst. Die Anpassung an das individuelle Tippverhalten ermöglicht bei Nutzern mit konstantem Tippverhalten in der Regel, die Kriterien für die Erkennung des Tipp-Ereignisses vergleichsweise streng auszulegen, ohne eine starke Häufung negativer Erkennungsfehler in Kauf nehmen zu müssen.

Keine große Verbesserung (und in manchen Fällen ggf. sogar eine Verschlechterung) der Bedienungsfreundlichkeit bringt die individuelle Anpassung der Tipp-Erkennung aber bei Nutzern, die selbst kein konstantes Tippverhalten haben oder deren individuelles Tippverhalten einem typischen Störmuster entspricht. Beides trifft besonders häufig auf Nutzer zu, die aufgrund höheren Alters, geringer Erfahrung mit elektronischen Eingabemitteln oder motorischer Einschränkungen ohnehin Probleme mit der Gewöhnung an eine Tipp-Steuerung haben.

De Erfindung liegt die Aufgabe zugrunde, die Bedienungsfreundlichkeit im Betrieb eines im oder am Ohr eines Nutzers getragenen Hörinstruments zu verbessern. Insbesondere soll die Häufigkeit von (positiven und negativen) Erkennungsfehlern bei der Anwendung einer Tipp-Steuerung im Betrieb des Hörinstruments geringgehalten werden.

Bezüglich eines Verfahrens zum Betrieb eines im oder am Ohr eines Nutzers getragenen Hörinstruments wird diese Aufgabe erfindungsgemäß gelöst durch die Merkmale des Anspruchs 1. Bezüglich eines Hörsystems wird die obige Aufgabe erfindungsgemäß gelöst durch die Merkmale des Anspruchs 15. Vorteilhafte und teils für sich gesehen erfinderische Ausgestaltungen und Weiterentwicklungen der Erfindung sind in den Unteransprüchen und der nachfolgenden Beschreibung dargelegt.

Die Erfindung geht aus von einem Hörinstrument, das für eine Tipp-Steuerung ausgelegt ist, d.h. von einem Hörinstrument, im Betrieb dessen durch einen mehrfachen, insbesondere zweifachen Fingertipp auf das Hörinstrument eine Aktion des Hörinstruments oder einer mit diesem verbundenen externen Funktionseinheit auslösbar ist.

Abweichend von der Lehre der US 10,959,008 B2 wird dabei nicht die Tipp-Steuerung des Hörinstruments an das individuelle Tippverhalten des Nutzers angepasst. Vielmehr beruht die Erfindung auf der Idee, den Nutzer auf ein bestimmtes von dem Hörinstrument erwartetes Tippverhalten zu trainieren und dieses Training besonders effektiv zu unterstützen. Hierzu wird erfindungsgemäß in einem Mehrfachtipp-Testschritt an den Nutzer eine Mehrfachtipp-Aufforderung zur Ausführung des mehrfachen Fingertipps (Mehrfachtipp) ausgegeben. Mittels eines in dem Hörinstrument integrierten Sensors wird ein Messsignal erfasst, das eine Signatur des ausgeführten Mehrfachtipps enthält. Das Messsignal wird mit einem hinterlegten Mehrfachtipp-Muster für den mehrfachen Fingertipp verglichen. An den Nutzer wird eine Rückmeldung ausgegeben, ob die in dem Messsignal enthaltene Signatur dem Mehrfachtipp-Muster entspricht. Im allgemeinen Fall kann der Mehrfachtipp im Rahmen der Erfindung eine beliebige Mehrzahl (z.B. zwei, drei, vier, etc.) einzelne Tippbewegungen (Einzeltipps) umfassen. Bevorzugt handelt es sich bei dem Mehrfachtipp aber um einen Doppeltipp, der aus genau zwei Einzeltipps gebildet ist.

Die zu Beginn des Mehrfachtipp-Testschritt an den Nutzer ausgegebene Mehrfachtipp-Aufforderung kann im Rahmen der Erfindung je nach Ausprägung des Hörsystems in verschiedenen für den Nutzer wahrnehmbaren und verständlichen Formen ausgegeben werden. Bei einer Ausführung des Hörsystems, bei der dieses nur aus dem Hörinstrument selbst besteht, wird die Mehrfachtipp-Aufforderung vorzugsweise akustisch, insbesondere in Form von gesprochener Sprache mittels des Hörinstruments an den Nutzer ausgegeben. Bei Ausführungen des Hörsystems, die zusätzlich zu dem Hörgerät ein externes Peripheriegerät, Z.B. eine Fernbedienung, aufweisen, kann die Mehrfachtipp-Aufforderung (z.B. in wiederum akustischer Form und/oder in visueller Form) auch mittels des Peripheriegeräts ausgegeben. Sofern das Peripheriegerät einen Bildschirm umfasst, wird die Mehrfachtipp-Aufforderung vorzugsweise als Text oder Video (mit oder ohne Ton) ausgegeben. Dasselbe gilt entsprechend bei einem Hörsystem, das zusätzlich zu dem Hörinstrument eine auf einem Smartphone installierte Bedien-App aufweist. In dem letzteren Fall wird vorzugweise der Bildschirm des Smartphones zur Ausgabe der Mehrfachtipp-Aufforderung verwendet.

Bei dem in dem Hörinstrument integrierten Sensor handelt es vorzugsweise um einen Beschleunigungssensor, dessen Messignal eine auf das Hörinstrument wirkende Beschleunigung wiedergibt. Als "Signatur" des Mehrfachtipps wird allgemein die durch die Tippbewegung hervorgerufene Änderung von dem Sensor erfassten Messignals bezeichnet, z.B. bei Ausführung des Sensors als Beschleunigungssensor die durch die Tippbewegung auf das Hörinstrument ausgeübte und gemessene Beschleunigung. Die durch den Mehrfachtipp hervorgerufene Signatur äußert sich in jedem Fall (unabhängig von der Art des herangezogenen Sensors) in mehreren Pulsen (d.h. pulsartigen Änderungen des Sensorsignals), die jeweils einer einzelnen Tippbewegung des Mehrfachtipps entspricht. Die Anzahl der Pulse innerhalb der Signatur entspricht (bei einem erwartungsgemäß ausgeführten Mehrfachtipp) der Anzahl der einzelnen Tippbewegungen des Mehrfachtipps. Die Signatur eines Doppeltipps sollte also zwei Pulse enthalten, die Signatur eines Dreifachtipps drei Pulse, etc.

Zusätzlich oder alternativ zu dem Beschleunigungssensor können im Rahmen der Erfindung auch ein oder mehrere andere im Hörinstrument integrierte Sensoren zur Erkennung des Mehrfachtipps herangezogen werden, z. B.
- ein Gyrosensor, der als Signatur des Fingertipps eine hierdurch hervorgerufene Verkippung (d.h. Drehbewegung) des Hörinstruments erfasst,
- ein Mikrofon (z.B. der ggf. vorhandene mindestens eine Eingangswandler des Hörinstruments), das als Signatur des Fingertipps einen hierdurch hervorgerufenen Schall erfasst,
- ein kapazitiver Sensor, der als Signatur des Fingertipps eine durch die Annäherung eines Fingers des Nutzers hervorgerufene Kapazitätsänderung erfasst,
- ein resistiver Sensor, der als Signatur des Fingertipps eine durch die Berührung des Hörinstruments durch den Finger des Nutzers hervorgerufene Widerstandsänderung erfasst, oder
- ein optischer Sensor, der als Signatur des Fingertipps eine durch die Annäherung eines Fingers des Nutzers oder die Berührung des Hörinstruments durch den Finger des Nutzers hervorgerufene Abschattung erfasst.

Allgemein enthält das Mehrfachtipp-Muster eines oder mehrere Kriterien, anhand derer bei der Auswertung des von dem Sensor gelieferten Messsignals die Signatur eines erwartungsgemäß ausgeführten Mehrfachtipps erkannt werden kann, um den Mehrfachtipp von anderen das Messignal beeinflussenden Ereignissen zu unterscheiden. In bevorzugter Ausgestaltung ist das Mehrfachtipp-Muster dabei derart definiert, dass es einen Grenzwert oder zulässigen Bereich für einen zeitlichen Abstand zwischen den durch den mehrfachen Fingertipp verursachten Pulsen der Signatur sowie einen Grenzwert oder zulässigen Bereich für die Amplitude der durch den mehrfachen Fingertipp verursachten Pulse der Signatur enthält. Beispielsweise werden aus dem Sensorsignal diejenigen Pulse extrahiert, deren Amplitude innerhalb eines im Rahmen des Mehrfachtipp-Musters definierten Bereichs liegt. Ein erwartungsgemäß ausgeführter Doppeltipp wird dabei beispielsweise daran erkannt, dass auf einen solchermaßen extrahierten ersten Puls innerhalb vorgegebenen Zeitfensters ein zweiter Puls mit einer Amplitude in dem zulässigen Bereich folgt.

Die an den Nutzer ausgegebene Rückmeldung kann im Rahmen der Erfindung, ebenso wie die Mehrfachtipp-Aufforderung, je nach Ausprägung des Hörsystems in verschiedenen für den Nutzer wahrnehmbaren und verständlichen Formen ausgegeben werden, insbesondere in akustischer und/oder visueller Form, textbasiert oder in Form eines Videos. Auf die vorstehenden Ausführungen zu der Mehrfachtipp-Aufforderung wird entsprechend verwiesen.

In einfachen Ausführungen der Erfindung enthält die Rückmeldung eine rein qualitative Information, erschöpft sich also in der Aussage, ob die in dem Messsignal enthaltene Signatur dem Mehrfachtipp-Muster entspricht oder ob nicht. In differenzierten Ausführungen der Erfindung enthält die Rückmeldung im negativen Fall (d.h. wenn das Messignal dem hinterlegten Mehrfachtipp-Muster nicht entspricht) alternativ oder zusätzlich eine Information, in welcher Hinsicht (z.B. in Bezug auf welches von mehreren Kriterien) die in dem Messignal enthaltene Signatur der Tippbewegung des Nutzers dem Mehrfachtipp-Muster nicht entspricht. In einer bevorzugten Variante enthält die Rückmeldung eine Information über die Abweichung des zeitlichen Abstands bzw. der Amplitude von dem jeweils im Rahmen des Mehrfachtipp-Musters hinterlegten Grenzwert oder zulässigen Bereich. Diese differenzierte Information kann im Rahmen der Erfindung ebenfalls qualitativ sein (z.B. "Tipp zu stark", "Tipp zu schwach", "Tipps zu schnell" oder "Tipps zu langsam"). Zusätzlich oder alternativ kann die Rückmeldung im Rahmen der Erfindung auch eine quantitative Information über die Abweichung des zeitlichen Abstands bzw. der Amplitude von dem jeweiligen Grenzwert oder zulässigen Bereich enthalten, z.B. in Form eines graphischen Säulendiagramms, dass die Stärke und Richtung der Abweichung der Abweichung des zeitlichen Abstands bzw. der Amplitude der Pulse von einem Sollwert anzeigt.

In einer weiteren Ausführungsform der Erfindung, in der ein Beschleunigungssensor oder Gyrosensor als Sensor herangezogen wird, wird ein Mehrfachtipp nur dann als solcher erkannt, wenn er von dem Nutzer in einer erwarteten Richtung (oder, äquivalenterweise, an einer bestimmten Stelle des Hörinstruments) vorgenommen wird. Hierzu wird nur eine vorbestimmte Richtungskomponente der erfassten Beschleunigungspulse bzw. Drehbewegungspulse des Messsignals mit dem Mehrfachtipp-Muster verglichen. Alternativ enthält das Mehrfachtipp-Muster einen Grenzwert oder zulässigen Bereich für die Richtung der Beschleunigungs- bzw. Drehbewegungspulse, mit welchem (Grenzwert oder zulässigen Bereich) der Messwert der (mehrdimensional gemessenen) Beschleunigung oder Drehbewegung verglichen wird.

Die an den Nutzer ausgegebene Rückmeldung enthält in dem letzteren Fall, wenn das Messignal hinsichtlich einer Richtung der Beschleunigungs- bzw. Drehbewegungspulse dem hinterlegten Mehrfachtipp-Muster nicht entspricht, eine (qualitative oder quantitative) Information über die Abweichung der Richtung von dem jeweils hinterlegten Grenzwert oder zulässigen Bereich.

Wie vorstehend angedeutet, korreliert die Richtung der unter einem Mehrfachtipp auf das Hörinstrument wirkenden Beschleunigungs- bzw. Drehbewegungspulse mit dem (relativ zu dem Hörinstrument betrachteten) Ort, an dem der Nutzer den Mehrfachtipp durchführt. Wenn der Nutzer den Fingertipp an einer (aus Sicht des Kopfes des Nutzers in Trageposition nach hinten weisenden) Rückseite des Hörinstruments durchführt, sind die durch den Mehrfachtipp verursachten Beschleunigungspulse nach vorne gerichtet; wenn der Nutzer den Fingertipp an einer (aus Sicht des Kopfes des Nutzers in Trageposition nach oben weisenden) Oberseite des Hörinstruments durchführt, sind die durch den Mehrfachtipp verursachten Beschleunigungspulse nach unten gerichtet; etc. Unter Berücksichtigung dieser Korrelation wird in einer vorteilhaften Ausführung der Erfindung aus der Richtung der gemessenen Beschleunigungs- bzw. Drehbewegungspulse der Ort (an dem Hörinstrument) berechnet, an dem der Nutzer den Mehrfachtipp ausgeführt hat. Die an den Nutzer ausgegebene Rückmeldung enthält dabei vorzugsweise, wenn die gemessene Beschleunigung hinsichtlich der Richtung der Beschleunigungspulse dem hinterlegten Mehrfachtipp-Muster nicht entspricht, eine (qualitative oder quantitative) Information für die Abweichung des Orts des Mehrfachtipps von einer dem Mehrfachtipp-Muster entsprechenden Sollposition (z.B. in Form einer der Aussagen "höher tippen", "zu tief getippt", etc.).

In einer bevorzugten Anwendung der Erfindung dient die Tipp-Steuerung zur Annahme oder Beendung eines Telefongesprächs an einem mit dem Hörinstrument datenübertragungstechnisch verbundenen Telefon. Bei dem Telefon handelt es sich dabei vorzugsweise um ein Mobiltelefon, insbesondere ein Smartphone. Denkbar wäre im Rahmen der Erfindung weiterhin auch, dass der Doppeltipp zur Annahme eines Türklingelanrufs (=Sprechanlage) oder zur Steuerung eines SmartSpeakers (leiser per Doppeltipp auf linkes HG und lauter per Doppeltipp rechtes Gerät) Aktivieren oder Deaktivieren eines Digital Assistants, etc genutzt wird.

, Grundsätzlich kann diese Erfindungsvariante aber in gleicher Weise auch bei einem mit dem Hörinstrument verbundenen Festnetztelefon oder Softphone (d.h. einer auf einem Computer implementierten Telefoniesoftware) angewendet werden. In der entsprechenden Variante des erfindungsgemäßen Verfahrens ist in dem Mehrfachtipp-Testschritt zumindest die Mehrfachtipp-Aufforderung als Simulation eines Telefonanrufs ausgebildet. In diesem Sinne ist die Mehrfachtipp-Aufforderung - vorzugsweise nach vorheriger Information des Nutzers und optional Freigabe durch den Nutzer - der gewöhnlichen Ankündigung eines Telefonanrufs mittels des Hörinstruments nachgebildet; insbesondere wird als Mehrfachtipp-Aufforderung mittels des Hörinstruments ein Klingelton an den Nutzer ausgegeben, auf den der Nutzer mit dem Mehrfachtipp reagieren soll. Vorzugsweise ist in dieser Variante zudem auch die im Mehrfachtipp-Testschritt an den Nutzer ausgegebene Rückmeldung als (fortgesetzte) Simulation des Telefonanrufs ausgestaltet, jedenfalls dann, wenn der Nutzer zuvor einen als ordnungsgemäß erkannten Mehrfachtipp abgegeben hatte und den simulierten Telefonanruf somit angenommen hatte; hierzu wird dem Nutzer die Rückmeldung mittels des Hörinstruments in Form einer Sprachnachricht ausgegeben. Die Beendung des Telefonanrufs kann im Rahmen der Erfindung in ähnlicher Weise als simulierter Telefonanruf gestaltet werden, indem der Nutzer (nach der Annahme des simulierten Telefonanrufs durch Mehrfachtipp) durch eine über das Hörinstrument ausgegebene Sprachnachricht zur Durchführung eines erneuten Mehrfachtipps aufgefordert wird. Als Rückmeldung werden in diesem Fall beispielsweise eine weitere Sprachnachricht oder ein Signalton ausgegeben.

In einer optionalen Weiterentwicklung dieser Erfindungsidee wird der Nutzer im Rahmen des simulierten Telefonanrufs zur Abgabe einer Sprachprobe (d.h. eines von dem Nutzer gesprochenen Textes) aufgefordert, wobei diese Sprachprobe durch das Hörinstrument oder eine externe Funktionseinheit des zugehörigen Hörsystems aufgenommen und dem Nutzer anschließend - zur Bestätigung der erfolgreichen Sprachaufnahme sowie zur Demonstration der Sprachqualität - über das Hörinstrument vorgespielt wird.

Der simulierte Telefonanruf kann grundsätzlich in einfacher Ausführung der Erfindung alleine durch das Hörinstrument durchgeführt werden. Eine tatsächlich bestehende datenübertragungstechnische Verbindung des Hörinstruments mit einem Telefon ist hierzu nicht zwingend notwendig. Im Sinne einer möglichst realistischen Simulation wird der simulierte Telefonanruf in einer zweckmäßigen Verfahrensvariante aber nur dann durchgeführt, wenn das Hörinstrument tatsächlich eine funktionierende Verbindung mit einem Telefon, insbesondere einem Smartphone mit einer darauf installierten Bedien-App des Hörsystems, aufgebaut hat. In diesem Fall wird die Rückmeldung über die erfolgreiche Durchführung des Mehrfachstipps durch den Nutzer (und damit die Annahme oder Beendung des simulierten Telefonanrufs) vorzugsweise auch auf dem Telefon angezeigt.

In einer weiteren vorteilhaften Ausführungsform der Erfindung wird zusammen mit oder anschließend an die Mehrfachtipp-Aufforderung zur Unterstützung des Nutzers bei der Ausführung des mehrfachen Fingertipps mittels des Hörinstruments ein rhythmischer Aufforderungsklang an den Nutzer ausgegeben, dessen Rhythmus mit der zeitlichen Abfolge einzelner Pulse (d.h. erwarteter Einzeltipps) innerhalb des Mehrfachtipp-Musters korreliert. Bei der vorstehend beschriebenen Ausgestaltung des Mehrfachtipp-Testschritts als simulierter Telefonanruf bildet der rhythmische Aufforderungsklang beispielsweise den vorstehend genannten Klingelton, der die Mehrfachtipp-Aufforderung begleitet. Bei dem rhythmischen Aufforderungsklang kann es sich beispielsweise um eine Folge einzelner zeitlich kurzer Töne (z.B. nach Art von Klick- oder Schlaggeräuschen) handeln, deren zeitlicher Abstand der zeitlichen Abfolge einzelner Fingertipps innerhalb des Mehrfachtipp-Musters entspricht. Der rhythmische Aufforderungsklang kann aber auch als Musikstück oder rhythmische Sprache gestaltet sein, dessen bzw. deren Rhythmus an die zeitliche Abfolge einzelner Fingertipps innerhalb des Mehrfachtipp-Musters angepasst ist; insbesondere stehen Grundschläge dieses Rhythmus in gleichem zeitlichem Abstand wie die einzelnen Fingertipps innerhalb des Fingertipp-Musters.

Die Ausgabe eines rhythmischen Aufforderungsklangs der vorstehend beschriebenen Art zur Unterstützung der Nutzerinteraktion mit dem Hörinstrument wird in einer Fortbildung des Erfindungsgedankens optional auch außerhalb des Mehrfachtipp-Testschritts und unabhängig von diesem in Situationen verwendet, in denen als Antwort auf ein Ereignis die Vornahme eines mehrfachen Fingertipps des Nutzers erwartet wird; z.B. zur Ankündigung eines tatsächlichen (d.h. nicht simulierten) eingehenden Telefonanrufs im normalen Betrieb des Hörinstruments. Diese Fortbildung wird als eigenständige Erfindung angesehen. Der Nutzer wird durch die Ausgabe des rhythmischen Aufforderungsklangs effektiv bei der korrekten Interaktion mit dem Hörinstrument unterstützt, indem er den durch den Aufforderungsklang vorgegebenen Rhythmus nur nachklopfen muss, um eine mit dem Mehrfachtipp verknüpfte Aktion auszulösen (z.B. den eingehenden Telefonanruf anzunehmen). Anstelle des Aufforderungsklangs kann im Rahmen der Erfindung auch eine rhythmische Vibration eines mit dem Hörinstrument verbundenen Smartphones ausgelöst werden.

Sowohl im Rahmen des Mehrfachtipp-Testschritts als in davon unabhängigen Anwendungsfällen erleichtert die Ausgabe des rhythmischen Aufforderungsklangs auch die Verwendung komplexer Mehrfachtipp-Muster, die nicht lediglich aus zwei oder mehr in gleichem zeitlichen Abstand aufeinander folgenden Einzeltipps bestehen; z.B. die Verwendung eines Mehrfachtipp-Musters, das aus zwei in einem kürzerem zeitlichen Abstand aufeinanderfolgenden Einzeltipps, gefolgt von zwei in einem längerem zeitlichen Abstand aufeinanderfolgenden Einzeltipps besteht. Solche komplexe Mehrfachtipp-Muster ermöglichen vorteilhafterweise die Realisierung einer Tipp-Steuerung mit einer hohen Unempfindlichkeit gegenüber Störereignissen (und somit einer sehr geringen Wahrscheinlichkeit von positiven Erkennungsfehlern).

Zusätzlich oder alternativ zu dem rhythmischen Aufforderungsklang kann im Rahmen der Erfindung auch ein haptisch wahrnehmbares Muster ausgelöst werden, insbesondere eine Vibration des Hörgerät oder eines damit datenübertragungstechnisch verbundenen Smartphones, wobei dieses Muster einen an die zeitliche Abfolge einzelner Fingertipps innerhalb des Mehrfachtipp-Musters angepassten Rhythmus aufweist.

In einer vorteilhaften Ausführungsform der Erfindung wird zusätzlich zu der Durchführung des Mehrfachtipp-Testschritts ein Einzeltipp-Testschritt durchgeführt, in dem der Nutzer zur Vornahme eines einzelnen Fingertipps aufgefordert wird. Der zusätzliche Einzeltipp-Testschritt dient dem Zweck eines abgestuften (und damit effektiveren) Trainings des Nutzers für die Durchführung des Mehrfachtipps. Im Rahmen der Erfindung kann der Einzeltipp-Testschritt beispielsweise stets zeitlich vor dem Mehrfachtipp-Testschritt durchgeführt werden, so dass der Nutzer standardgemäß zuerst bei der Durchführung einzelner Tippbewegungen trainiert wird, bevor er zur Ausführung eines Mehrfachtipps veranlasst wird. Alternativ kann im Rahmen der Erfindung aber auch vorgesehen sein, dass der Einzeltipp-Testschritt zeitlich nach dem Mehrfachtipp-Testschritt durchgeführt wird, und zwar insbesondere nur dann, wenn zuvor einer oder mehrere (z.B. in 3 oder 5 nacheinander durchgeführte) Mehrfachtipp-Testschritte gescheitert sind, d.h. wenn dem Nutzer in dem einen oder den mehreren vorgelagerten Mehrfachtipp-Testschritten die Vornahme eines ordnungsgemäßen (also dem Mehrfachtipp-Musters entsprechenden) Mehrfachtipps misslungen ist. In einer Verfeinerung dieser Ausführungsvariante wird der Einzeltipp-Testschritt nur dann durchgeführt, wenn zuvor eine Auswertung des Tippverhaltens des Nutzers in einem oder mehreren gescheiterten Mehrfachtipp-Testschritten ergibt, dass der Nutzer in diesem mindestens einen vorausgegangenen Mehrfachtipp-Testschritt die Tippbewegung zu stark, zu schwach und/oder in falscher Richtung (bzw. an einer falschen Stelle des Hörinstruments) durchgeführt hat.

Grundsätzlich wird der Einzeltipp-Testschritt in analoger Weise zu dem Mehrfachtipp-Testschritt durchgeführt, indem der Nutzer zunächst zur Vornahme der Tippbewegung aufgefordert wird, indem auf die Aufforderung hin mittels in dem Hörinstrument integrierten Sensors das Messsignal erfasst und mit einem hinterlegten Muster vergleichen wird, und indem der Nutzer anschließend eine Rückmeldung über den Erfolg oder Misserfolg des Testschritts erhält. Die vorstehenden Erläuterungen zu verschiedenen Ausführungsvarianten des Mehrfachtipp-Testschritts sind daher entsprechend auch auf den Einzeltipp-Testschritt zu übertragen. Abweichend von dem Mehrfachtipp-Testschritt wird aber in dem Einzeltipp-Testschritt (anstelle der Mehrfachtipp-Aufforderung), z.B. visuell mittels des Peripheriegeräts und/oder akustisch mittels des Peripheriegeräts oder des Hörinstruments, eine Einzeltipp-Aufforderung an den Nutzer ausgegeben, mit der der Nutzer zu Vornahme des einzelnen Fingertipps (Einzeltipps) aufgefordert wird. Entsprechend enthält das von dem Sensor erfasste Messignal hier eine Signatur des von dem Nutzer vorgenommenen Einzeltipps (anstelle einer Signatur des Mehrfachtipps), und das erfasste Messignal wird hier auch mit einem entsprechenden, hinterlegten Einzeltipp-Muster (anstelle des für den Mehrfachtipp-Testschritt herangezogenen Mehrfachtipp-Musters) verglichen. Schließlich enthält die in dem Einfachtipp-Testschritt ausgegebene Rückmeldung eine Information, ob die in dem Messsignal enthaltene Signatur dem Einzeltipp-Muster entspricht. Ebenfalls analog zu dem Mehrfachtipp-Testschritt handelt es sich bei dem herangezogenen Sensor vorzugsweise um einen Beschleunigungssensor oder einen Gyrosensor. Bei dem erfassten Messignal handelt es sich entsprechend bevorzugt um ein Beschleunigungs- oder Drehbewegungssignal.

In einer weiteren Ausführungsvariante der Erfindung wird zusätzlich zu dem Mehrfachtipp-Testschritt ein Anweisungs-Schritt durchgeführt, in dem (z.B. visuell mittels des Peripheriegeräts und/oder akustisch mittels des Peripheriegeräts oder des Hörinstruments, z.B. in Form eines angezeigten Textes, eines gesprochenen Textes oder eines stummen oder mit Ton unterlegten Videos) eine Anweisung zur Durchführung des mehrfachen Fingertipps an den Nutzer ausgegeben wird. Der zusätzliche Anweisungs-Schritt dient zur theoretischen Einweisung des Nutzers in die ordnungsgemäße Vornahme des Mehrfachtipps. Im Rahmen der Erfindung kann der Anweisungs-Schritt beispielsweise stets zeitlich vor dem Mehrfachtipp-Testschritt (oder ggf. dem Einzeltipp-Testschritt) durchgeführt werden. Alternativ kann im Rahmen der Erfindung aber auch vorgesehen sein, dass der Anweisungs-Schritt zeitlich nach dem Mehrfachtipp-Testschritt durchgeführt wird, und zwar insbesondere nur dann, wenn zuvor einer oder mehrere (z.B. in 3 oder 5 nacheinander durchgeführte) Mehrfachtipp-Testschritte gescheitert sind, d.h. wenn dem Nutzer in dem einen oder den mehreren vorgelagerten Mehrfachtipp-Testschritten die Vornahme eines ordnungsgemäßen (also dem Mehrfachtipp-Musters entsprechenden) Mehrfachtipps misslungen ist.

Wie vorstehend bereits angedeutet, wird der Mehrfachtipp-Testschritt vorzugsweise als ein Schritt in einer Reihe von mehreren Schritten durchgeführt, die in ihrer Gesamtheit dem Training des Nutzers zur ordnungsgemäßen Vornahme des Mehrfachtipps dienen. Das Verfahren umfasst mit anderen Worten bevorzugt zusätzlich zu dem (einfach ausgeführten) Mehrfachtipp-Testschritt einen oder mehrere weitere Hilfsschritte. Diese Hilfsschritte werden dabei insbesondere ausgewählt werden aus einer Gruppe, die den
- den vorstehend beschriebenen Einzeltipp-Testschritt (gemäß Anspruch 9),
- den vorstehend beschriebenen Anweisungsschritt (gemäß Anspruch 10) und
- eine wiederholte Ausführung des Mehrfachtipp-Testschritts,
   enthält. Bevorzugt wird dabei eine Auswahl über die Art und Anzahl der weiteren Hilfsschritte und die Reihenfolge des Mehrfachtipp-Testschritt und der weiteren Hilfsschritte getroffen. Diese Auswahl erfolgt dabei in Abhängigkeit von
- persönlichen Daten zu dem Nutzer (d.h. Daten, die den Nutzer charakterisieren, wie z.B. Alter, Geschlecht und/oder Erfahrung mit elektronischen Kommunikationsgeräten und/oder digitaler Information) und/oder
- einer vorausgegangenen Interaktion des Nutzers mit dem Hörinstrument (d.h. der Nutzungshistorie, insbesondere Statistik zu erfolgreichen und gescheiterten Mehrfachtipp-Testschritten) und/oder
- mindestens einer Umgebungsbedingung (z.B. dem Signal-Rauschverhältnis des von dem Beschleunigungssensor aufgenommenen Beschleunigungssignals).

Der vorstehend verwendete Begriff "Anzahl der Hilfsschritte" und insbesondere die Verwendung der Pluralform für die Hilfsschritte umfasst hierbei auch den Fall, dass im Zuge der Auswahl zusätzlich zu dem (einfach durchgeführten) Mehrfachtipp-Testschritt lediglich ein einziger Hilfsschritt ausgewählt wird. Die "Anzahl der Hilfsschritte" kann mit anderen Worten auch eins sein.

In einem Beispiel erfolgt die Auswahl der Anzahl der Hilfsschritte und die Reihenfolge der Schritte in Abhängigkeit von persönlichen Daten zu dem Nutzer (nämlich dem Alter des Nutzers und/oder der Technik-Affinität des Nutzers, d.h. der Erfahrung des Nutzers mit modernen elektronischen Endgeräten wie Hörinstrumenten, Mobiltelefonen, etc.), indem
- bei einem jüngeren Nutzer (z.B. bei einem Alter unter 65 Jahre) bzw. einem technik-affinen Nutzer nur der Anweisungs-Schritt, gefolgt von dem (optional als (Anrufsimulation ausgestalteten) Mehrfachtipp-Test durchgeführt wird, während
- bei einem älteren Nutzer (z.B. bei einem Alter von 65 Jahre oder mehr) bzw. einem wenig technik-affinen Nutzer zwischen dem Anweisungs-Schritt und dem Mehrfachtipp-Test zusätzlich der Einzeltipp-Test durchgeführt wird.

Das Alter des Nutzers und ein Grad der Technik-Affinität werden vorzugsweise vor der Durchführung der vorstehend genannten Schritte, z.B. mittels einer Eingabemaske der Bedien-App, abgefragt.

In einem anderen Beispiel erfolgt die Auswahl der Anzahl der Hilfsschritte und die Reihenfolge der Schritte in Abhängigkeit von der Nutzungshistorie des Nutzers, indem (wie vorstehend schon erwähnt) der Einzeltipp-Test nur dann durchgeführt wird, wenn zuvor einer oder mehrere vorherige Mehrfachtipp-Tests gescheitert sind.

In einem weiteren Beispiel erfolgt die Auswahl der Anzahl der Hilfsschritte und die Reihenfolge der Schritte in Abhängigkeit von Umgebungsbedingungen (nämlich des Signal-Rauschverhältnisses des von dem Sensor erfassten Messsignals), indem der Mehrfachtipp-Test standardgemäß mehrfach hintereinander durchgeführt wird, wenn das Signal-Rauschverhältnis des Messsignals einen Grenzwert unterschreitet; wenn der Sensor als Beschleunigungssensor ausgeführt ist, tritt dieser Fall typischerweise dann auf, wenn der Nutzer bei der Durchführung des Verfahrens starken Vibrationen ausgesetzt ist (z.B. während der Fahrt in einem öffentlichen Verkehrsmittel auf unebenem Grund).

Zusätzlich oder alternativ zu der Auswahl der Anzahl und Reihenfolge der Hilfsschritte wird in einer bevorzugten Ausführung des Verfahrens die Durchführung des Mehrfachtipp-Testschrittes in Abhängigkeit von den persönlichen Daten zu dem Nutzer und/oder der vorausgegangenen Interaktion des Nutzers mit dem Hörinstrument und/oder mindestens einer Umgebungsbedingung (wie vorstehend näher beschrieben) variiert.

In einem Beispiel wird die Durchführung des Mehrfachtipp-Testschrittes in Abhängigkeit von persönlichen Daten zu dem Nutzer (nämlich dem Alter des Nutzers) variiert, indem
- bei einem jüngeren Nutzer (z.B. bei einem Alter unter 50 Jahre) die Mehrfachtipp-Aufforderung und/oder Rückmeldung zu einem unzulässigen Geschwindigkeit, einer unzulässiger Stärke oder einer unzulässiger Richtung der einzelnen Tippbewegungen des versuchten Mehrfachtipps in graphischer Form (z.B. im Rahmen eines Computerspiels-Spiels im Rahmen einer auf einem Smartphone des Nutzers installierten Bedien-App) ausgegeben werden, während
- bei einem älteren Nutzer (z.B. bei einem Alter von 50 Jahre oder mehr) die Mehrfachtipp-Aufforderung und/oder Rückmeldung in text-basierter Form (z.B. i gesprochener Form über das Hörinstrument oder als Textanzeige der Bedien-App) ausgegeben werden.

In einem anderen Beispiel wird die Durchführung des Mehrfachtipp-Testschrittes in Abhängigkeit von der Nutzungshistorie variiert, indem
- eine spezifische Rückmeldung zu unzulässiger Geschwindigkeit, unzulässiger Stärke oder unzulässiger Richtung der einzelnen Tippbewegungen des versuchten Mehrfachtipps (d.h. ein Einzeltraining der Tippgeschwindigkeit, Stärke oder Richtung) nur bei Scheitern mehrerer (z.B. mehr als 10) vorheriger Mehrfachtipp-Tests durchgeführt wird, während
- nach einem ein- oder erstmaligen Scheitern des Mehrfachtipp-Tests nur eine einfache qualitative Rückmeldung (z.B. in Form der Textnachricht "Mehrfachtipp nicht erkannt") ausgegeben wird.

In einem weiteren Beispiel wird die Durchführung des Mehrfachtipp-Testschrittes in Abhängigkeit von Umgebungsbedingungen (nämlich des Signal-Rausch-Verhältnisses des von dem Sensor erfassten Messsignals) variiert, indem
- eine spezifische Rückmeldung zu unzulässiger Geschwindigkeit, unzulässiger Stärke oder unzulässiger Richtung der einzelnen Tippbewegungen des versuchten Mehrfachtipps nur dann ausgegeben wird, wenn das Signal-Rausch-Verhältnis des Messsignals einen Grenzwert unterschreitet, während
- ansonsten nur eine einfache qualitative Rückmeldung (z.B. in Form der Textnachricht "Mehrfachtipp erkannt" bzw. "Mehrfachtipp nicht erkannt") ausgegeben wird.

Bevorzugt ist das im Einzeltipp-Testschritt herangezogene Einzeltipp-Muster derart vorgegeben, dass es hinsichtlich der Amplitude und/oder ggf. der Richtung des durch den einzelnen Fingertipp verursachten Pulses des Messsignals, bei Heranziehung eines Beschleunigungssensors oder Gyrosensors also hinsichtlich der Amplitude und/oder ggf. der Richtung der durch den einzelnen Fingertipp hervorgerufenen Beschleunigungs- bzw. Drehbewegungspulse, dem in dem Mehrfachtipp-Testschritt herangezogenen Mehrfachtipp-Muster entspricht. Das Einzeltipp-Muster fordert somit einen einzelnen Fingertipp, der mit der gleichen Stärke bzw. in der gleichen Richtung (d.h. an der gleichen Stelle des Hörinstruments) ausgeführt wird wie die einzelnen Fingertipps innerhalb des dem Mehrfachtipp-Muster entsprechenden Mehrfachtipps.

In einer weiteren Ausführungsform des Verfahrens wird in dem Anweisungs-Schritt in Abhängigkeit von persönlichen Daten zu dem Nutzer (wie vorstehend beschrieben) eine Auswahl aus mehreren unterschiedlichen Varianten der Anweisung getroffen.

In einem Beispiel wird in Abhängigkeit von dem Alter des Nutzers zwischen einer ersten Variante der Anweisung in Form einer rein text-basierten Anleitung und einer zweiten Variante der Anweisung in Form eines Lernvideos ausgewählt; beispielsweise wird an einen jüngeren Nutzer (z.B. bei einem Alter unter 60 Jahren) das Lernvideo ausgegeben, während an einen älteren Nutzer (z.B. ab einem Alter von 60 Jahren) die rein text-basierten Anleitung ausgegeben wird.

In einem anderen Beispiel wird in Abhängigkeit von dem Alter des Nutzers zwischen verschiedenen Lernvideos ausgewählt.

Das erfindungsgemäße Hörsystem umfasst ein im oder am Ohr eines Nutzers tragbares Hörinstrument mit einem darin integrierten Sensor, der allgemein zur Erfassung einer Tippbewegung des Nutzers auf das Hörinstrument ausgelegt ist. Mit anderen Worten erzeugt der Sensor ein Messsignal, in dem eine Signatur eines mehrfachen Fingertipps enthalten ist, wenn der Nutzer einen solchen mehrfachen Fingertipp auf das Hörinstrument ausführt. Das Hörsystem umfasst weiterhin eine Fingertipp-Erkennungseinheit, die dazu ausgebildet ist, durch Vergleich des Messsignals mit dem hinterlegten Mehrfachtipp-Muster einen mehrfachen, insbesondere zweifachen Fingertipp auf das Hörinstrument zu erkennen und bei Erkennung des mehrfachen Fingertipps eine Aktion des Hörinstruments oder einer mit diesem verbundenen externen Funktionseinheit auszulösen. Das Hörsystem umfasst außerdem eine Mehrfachtipp-Trainingseinheit, die zur Durchführung des vorstehend beschriebenen Mehrfachtipp-Testschritts ausgebildet ist.

Im Rahmen des erfindungsgemäßen Hörsystems können die Fingertipp-Erkennungseinheit und die Mehrfachtipp-Trainingseinheit wahlweise als nicht-programmierbare Hardware-Einheit (z.B. in Form eines ASIC) oder als Software-Modul oder als Kombination von nicht-programmierbaren Hardware-Bestandteilen und Software ausgebildet sein. Weiterhin können die Fingertipp-Erkennungseinheit und die Mehrfachtipp-Trainingseinheit im Rahmen der Erfindung wahlweise in jeweils einer einzigen Baueinheit (z.B. einem ASIC-Chip) integriert oder auf mehrere Baueinheiten verteilt realisiert sein. Zudem können die Fingertipp-Erkennungseinheit und die Mehrfachtipp-Trainingseinheit oder Bestandteile davon auch in einer gemeinsamen Baueinheit integriert sein.

In einer einfachen Ausführung der Erfindung ist das Hörsystem ausschließlich aus dem Hörinstrument gebildet. In diesem Fall sind auch die Fingertipp-Erkennungseinheit und die Mehrfachtipp-Trainingseinheit vollständig in dem Hörinstrument integriert. Vorzugsweise umfasst das Hörsystem aber zusätzlich zu dem Hörinstrument mindestens eine externe (d.h. räumlich von dem Hörinstrument getrennte oder getrennt implementierte) Funktionseinheit, die im Betrieb des Hörsystems über eine drahtlose oder drahtgebundene Datenübertragungsstrecke mit dem Hörinstrument verbunden ist. Bei der externen Funktionseinheit handelt es sich beispielsweise um ein eigenständiges elektronisches Peripheriegerät (wie vorstehend beschrieben) oder um eine Bedien-App (wie ebenfalls vorstehend beschrieben). In den letzteren Fällen ist bevorzugt zumindest ein Bestandteil der Fingertipp-Erkennungseinheit und/oder der Mehrfachtipp-Trainingseinheit in der externen Funktionseinheit implementiert, z.B. als Software-Modul der Bedien-App. Sofern die externe Funktionseinheit durch eine Bedien-App gebildet ist, nutzt sie zur datenübertragungstechnischen Verbindung entsprechende Kommunikationsdienste (z.B. einen Bluetooth-Transceiver) eines regelmäßig nicht zum Hörsystem gehörenden elektronischen Geräts (z.B. eines Mobiltelefons oder Tablet-Computers), auf dem sie installiert ist. Die Mehrfachtipp-Trainingseinheit oder Teile davon können zudem im Rahmen der Erfindung auch in einem Cloud-Server implementiert sein.

Das Hörinstrument kann im Rahmen der Erfindung in einer beliebigen Bauform (insbesondere wie eingangs beschrieben) vorliegen, z.B. als BTE-, RIC-, oder ITE-Gerät, als implantiertes Gerät oder als Kopfhörer. In einer bevorzugten Anwendung der Erfindung der Erfindung handelt es sich bei dem Hörinstrument um ein Hörgerät.

Das erfindungsgemäße Hörsystem ist allgemein zur automatischen Durchführung des erfindungsgemäßen Verfahrens ausgebildet. Die vorstehend beschriebenen Varianten des Verfahrens korrespondieren dabei mit entsprechenden Varianten des Hörsystems, so dass die vorstehenden Ausführungen zu Details, Optionen, Funktionen und Wirkungen von Verfahrensvarianten auf die jeweils entsprechenden Vorrichtungsvarianten zu übertragen sind, und umgekehrt. Sofern vorstehende Ausführungen zu Ausführungsformen der Erfindung nicht ausdrücklich auf das Verfahren oder das Hörsystem bezogen sind, beziehen sich diese Ausführungen sowohl auf das Verfahren als auch auf das Hörsystem.

Nachfolgend werden Ausführungsformen der Erfindung anhand einer Zeichnung näher erläutert. Darin zeigen:
- Fig. 1: in einer schematischen Darstellung ein Hörsystem, dass aus einem Hörgerät und einer in einem Smartphone installierten Bedien-App gebildet ist, und
- Fig. 2: in einem schematischen Blockschaltbild den Aufbau eines als Teil der Bedien-App implementierten Lernsystems.

Einander entsprechende Teile und Größen sind in allen Figuren stets mit gleichen Bezugszeichen versehen.

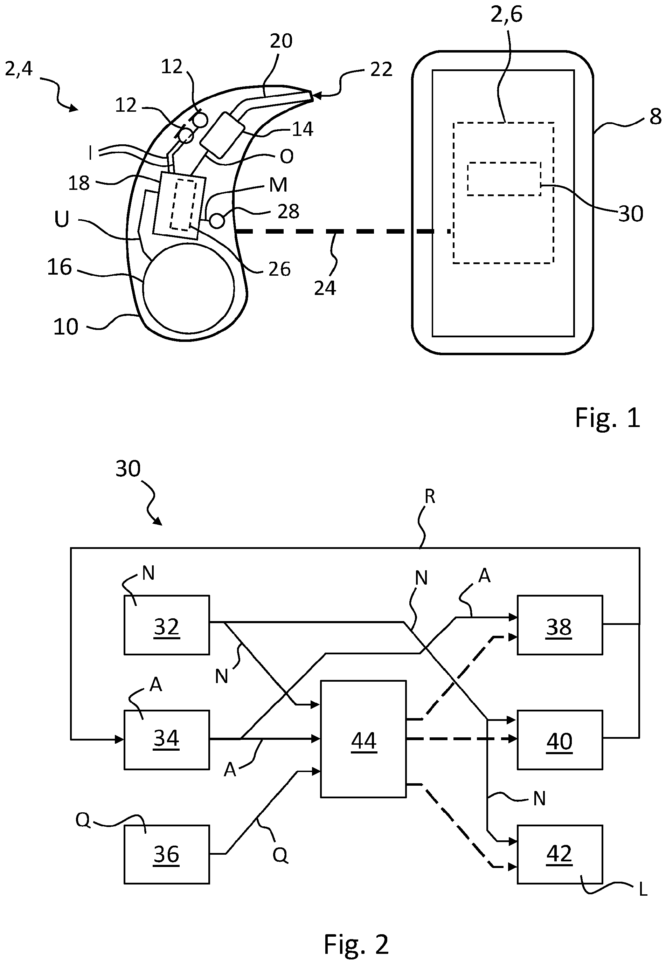

Fig. 1 zeigt ein Hörsystem 2, das hier aus einem Hörgerät 4, d. h. einem zur Unterstützung des Hörvermögens eines hörgeschädigten Nutzers eingerichteten Hörinstrument, und einer Software-Applikation (Bedien-App 6) besteht. Bei dem Hörgerät 4 handelt es sich in dem hier dargestellten Beispiel um ein hinter einem Ohr eines Nutzers tragbares BTE-Hörgerät. Die Bedien-App 6 ist im betriebsfähigen Zustand des Hörsystems 2 auf einem programmierbaren elektronischen Gerät installiert, z.B. einem Smartphone 8, wobei dieses elektronische Gerät selbst kein Teil des Hörsystems 2 ist. Vielmehr wird das Smartphone 8 von der Bedien-App 6 lediglich als Ressource für Speicherplatz und Rechenleistung und Kommunikationsdienste (d.h. Hardware und Software zur Datenübertragung) genutzt.

Optional, in einer weiteren Ausführungsform der Erfindung, umfasst das Hörsystem 2 zusätzlich ein nicht ausdrücklich dargestelltes zweites Hörgerät zur Versorgung des zweiten Ohrs des Nutzers, das hinsichtlich seines Aufbaus insbesondere dem in Fig. 1 dargestellten Hörgerät 4 entspricht.

Das Hörgerät 4 umfasst innerhalb eines Gehäuses 10 zwei Mikrofone 12 als Eingangswandler sowie einen Hörer 14 (Receiver) als Ausgangswandler. Das Hörgerät 4 umfasst weiterhin eine Batterie 16 und eine zentrale Elektronikeinheit, die nachfolgend als Audioprozessor 18 bezeichnet ist. Beispielsweise umfasst der Audioprozessor 18 einen Mikroprozessor für zentrale, software-implementierte Steuerfunktionen sowie einen speziell auf die Verarbeitung von Audiosignalen ausgelegten (insbesondere digitalen) Signalprozessor. Der Audioprozessor 18 enthält dabei vorzugsweise mindestens eine programmierbare Untereinheit sowie mindestens eine nicht-programmierbare Untereinheit. Insbesondere ist der Signalprozessor vorzugsweise aus nicht-programmierbaren und programmierbaren Bestandteilen zusammengesetzt.

Der Audioprozessor 18 wird aus der Batterie 16 mit einer elektrischen Versorgungsspannung U versorgt.

Im Normalbetrieb des Hörgeräts 4 nehmen die Mikrofone 12 jeweils einen Luftschall aus der Umgebung des Hörgeräts 4 auf. Die Mikrofone 12 wandeln den Schall in (Eingangs-)Audiosignale I um, die Information über den aufgenommenen Schall enthalten. Die Eingangs-Audiosignale I werden innerhalb des Hörgeräts 4 dem Audioprozessor 18 (und hier insbesondere dem Signalprozessor) zugeführt, der diese Eingangs-Audiosignale I zur Unterstützung des Hörvermögens des Nutzers modifiziert.

Der Audioprozessor 18 gibt ein (Ausgangs-)Audiosignal O, das Information über den verarbeiteten und somit modifizierten Schall enthält, an den Hörer 14 aus.

Der Hörer 14 wandelt das Ausgangs-Schallsignal O in einen modifizierten Luftschall um. Dieser modifizierte Luftschall wird über einen Schallkanal 20, der den Hörer 14 mit einer Spitze 22 des Gehäuses 10 verbindet, sowie über einen (nicht explizit gezeigten) flexiblen Schallschlauch, der die Spitze 22 mit einem in den Gehörgang des Nutzers eingesetzten Ohrstück verbindet, in den Gehörgang des Nutzers übertragen.

Das Hörgerät 4 und die Bedien-App 6 tauschen im Betrieb des Hörsystems 2 Daten über eine drahtlose Datenübertragungsverbindung 24 aus. Die Datenübertragungsverbindung 24 beruht beispielsweise auf dem Bluetooth LE-Standard. Die Hör-App 6 greift hierbei auf einen Bluetooth-Transceiver des Smartphones 8 zu, um Daten von dem Hörgerät 4 zu empfangen und Daten an dieses zusenden. Das Hörgerät 4 umfasst seinerseits einen (nicht explizit dargestellten) Bluetooth-Transceiver, um Daten an die Bedien-App 6 zu senden und Daten von dieser Bedien-App 6 zu empfangen.

Zur Realisierung einer Tipp-Steuerung für eine oder mehrere Funktionen des Hörgeräts 4 und/oder der Bedien-App 6 umfasst das Hörsystem 2 eine Fingertipp-Erkennungseinheit 26. In dem in Fig. 1 dargestellten Beispiel ist die Fingertipp-Erkennungseinheit 26 als Software-Modul ausgebildet, das in dem Audioprozessor 18 des Hörgeräts 4 (und dort insbesondere in dem Mikrocontroller) installiert und ausführbar ist. Alternativ ist die Fingertipp-Erkennungseinheit 26 als nicht programmierbare Hardware (d.h. als nicht-programmierbarer elektronischer Schaltkreis, insbesondere in Form eines ASIC oder Teil eines solchen) oder als Kombination aus nicht-programmierbarer Hardware und Software gebildet.

Zur Erkennung von Tippbewegungen, die der Nutzer auf das Gehäuse 10 des Hörgeräts 4 ausführt, greift die Fingertipp-Erkennungseinheit 26 auf ein Messsignal M eines ebenfalls in dem Hörgerät 4 integrierten Beschleunigungssensors 28 zu. Bei dem Beschleunigungssensor 28 handelt es sich in dem dargestellten Beispiel um einen Drei-Achsen-Beschleunigungssensor, der zusätzlich zu der Stärke auch die Richtung der auf das Hörgerät 4 wirkenden Beschleunigung zeitaufgelöst misst.

Zwei Funktionen der Bedien-App 6, die im Beispiel gemäß Fig. 1 mittels der Tipp-Steuerung auslösbar sind, sind die Annahme eines an dem Smartphone 8 eingehenden Telefonanrufs und die Beendung eines mittels Smartphones 8 geführten Telefonanrufs.

Um die Wahrscheinlichkeit einer fehlerhaften Erkennung eines Fingertipps (also eines positiven Erkennungsfehlers, wie vorstehend beschrieben) gering zu halten, wird von der Fingertipp-Erkennungseinheit 26 zur Auslösung einer oder mehrerer bestimmter Funktionen, insbesondere der Annahme oder der Beendung eines Telefonanrufs, die Abgabe eines mehrfachen, nämlich doppelten Fingertipps ("Doppeltipp") auf das Gehäuse 10 des Hörgeräts 4 gefordert. Um diese Funktion bzw. Funktionen auszulösen, muss der Nutzer also zweimal in kurzem zeitlichem Abstand (von z.B. etwa 0,2 sec) mit dem Finger auf das Gehäuse 10 tippen.

Um einen solchen Doppeltipp des Nutzers zu erkennen, überwacht die Fingertipp-Erkennungseinheit 26 das Messsignal M des Beschleunigungssensors 28. Diese Überwachung erfolgt entweder fortlaufend während des gesamten Betriebs des Hörgeräts 4 oder - bevorzugt - nur in Situationen, in denen ein Doppeltipp des Nutzers erwartet wird, z.B. während der Ankündigung eines eingehenden Telefonanrufs (also z.B. während des Abspielens eines Telefon-Klingeltons) zur Annahme des Telefonanrufs und/oder während des Telefonanrufs zur Beendung desselben.

Durch die von dem Nutzer auf das Gehäuse 10 abgegebene Tippbewegung erfährt das Hörgerät 4 eine charakteristische Beschleunigung, die von dem Beschleunigungssensor 28 erfasst wird. Die Tippbewegung des Nutzers äußert sich somit in einer charakteristischen Änderung des Messsignals M, die als "Signatur" der Tippbewegung bezeichnet wird. So äußert sich die Signatur des von dem Nutzer vorgenommenen Doppeltipps in dem Messignal M typischerweise in zwei (Beschleunigungs-)Pulsen, die durch eine bestimmte Richtung, einen bestimmten zeitlichen Abstand und jeweils eine bestimmte Stärke (d.h. einen bestimmten Maximalwert der Beschleunigung relativ zu einem Grund- oder Normalwert) charakterisiert sind.

Die Fingertipp-Erkennungseinheit 26 vergleicht hierbei (unmittelbar oder mittelbar) das von dem Beschleunigungssensor 28 erfasste Messsignal M mit einem vorgegebenen Doppeltipp-Muster und löst bei Erkennung des Doppeltipps die diesem zugeordnete Funktion, also je nach dem Kontext (d.h. der Situation, in der der Doppeltipp vorgenommen wurde) z.B. die Annahme des eingehenden Telefonanrufs oder die Beendung des gerade geführten Telefonanrufs, aus. Im Falle der beiden vorstehend genannten Funktionen übermittelt die Fingertipp-Erkennungseinheit 26 bei Erkennung des Doppeltipps eine Anweisung an die Bedien-App 6, die wiederum das Smartphone 8 entsprechend ansteuert.

In der bevorzugten Ausführung des Hörsystems 2 enthält das Doppeltipp-Muster Grenzwerte oder zulässige Bereiche für den zeitlichen Abstand, einen Grenzwert für eine minimale Stärke und einen zulässigen Bereich der Richtung der beiden Beschleunigungspulse. Die Fingertipp-Erkennungseinheit 26 bestimmt beispielsweise für jeden Beschleunigungspuls des Messsignals M, der den vorgegebenen Grenzwert für die minimale Stärke überschreitet, den jeweiligen Zeitpunkt und die Beschleunigungsrichtung (relativ zu dem Hörgerät 4). Sie erkennt dabei die Signatur des von dem Nutzer abgegebenen Doppeltipps daran, dass der zeitliche Abstand von zwei diese Bedingung erfüllenden Pulsen innerhalb des zulässigen Bereichs der Beschleunigungsrichtung legen und zeitlich innerhalb des vorgegebenen Abstandsbereichs aufeinander folgen.

Zusätzlich zu dem Doppeltipp-Muster ist in der Fingertipp-Erkennungseinheit 26 auch ein Einfachtipp-Muster hinterlegt, das jeweils einen Grenzwert oder zulässigen Bereich für die Stärke und die Richtung des einfachen Fingertipps (Einfachtipps) enthält. Diese Grenzwerte bzw. zulässigen Bereiche sind dabei derart festgelegt, dass die den entsprechenden Größen des Doppeltipp-Musters entsprechen. Ein ordnungsgemäße Einfachtipp ist also mit gleicher Stärke und in gleicher Richtung (bzw. an der gleichen Stelle des Hörgeräts 4) auszuführen wie die einzelnen Tippbewegungen bei einem ordnungsgemäßen Doppeltipp.

In einer alternativen Ausführung umfasst die Fingertipp-Erkennungseinheit 26 ein künstliches neuronales Netzwerk, das mit entsprechenden Beschleunigungskurven, die die Signatur von ordnungsgemäßen Doppeltipps enthalten, auf die Erkennung von Doppeltipps trainiert wurde. Das Doppeltipp-Muster ist in diesem Fall durch die aufgrund des Trainings erzielte Konfiguration des künstlichen neuronalen Netzwerkes gegeben. Im Betrieb der Fingertipp-Erkennungseinheit 26, oder jedenfalls in Situationen, in denen ein Doppeltipp des Nutzers erwartet wird, wird das Messignal M (insbesondere ein gleitender zeitlicher Abschnitt desselben) dem künstlichen neuronalen Netzwerk als Eingangsgröße zugeführt. Das künstliche neuronale Netzwerk berechnet hieraus eine Ausgangsgröße, die die Erkennung eines Doppeltipps entweder in binärer Form (Doppeltipp erkannt oder nicht erkannt) oder in kontinuierlicher Form (z.B. als Wahrscheinlichkeit für das Vorliegen eines Doppeltipps) angibt. Das künstliche neuronale Netzwerk wird optional im Betrieb des Hörgeräts 4 fortlaufend anhand von positiven Erkennungsfehlern (also Abschnitte des Messignals M, die fälschlicherweise als Tipp-Ereignis erkannt wurden,) weiter trainiert und ist somit als selbstlernendes System ausgebildet.

Zusätzlich zu der Fingertipp-Erkennungseinheit 26 umfasst das Hörsystem 2 ein Lernsystem 30, das dazu dient, den Nutzer auf die korrekte Vornahme von mehrfachen Fingertipps (hier Doppeltipps) zu trainieren. Ebenso wie die Fingertipp-Erkennungseinheit 26 ist das Lernsystem 30 vorzugsweise als Softwaremodul ausgeführt, das allerdings in der Ausführung gemäß Fig. 1 nicht in dem Hörgerät 4, sondern - soweit nicht abweichend beschrieben - als Teil der Bedien-App 6 implementiert ist. Grundsätzlich kann das Lernsystem 30 alternativ aber auch als nicht programmierbare Hardware (d.h. als nicht-programmierbarer elektronischer Schaltkreis, insbesondere in Form eines ASIC oder Teil eines solchen) oder als Kombination aus nicht-programmierbarer Hardware und Software gebildet sein.

Eine bevorzugte Ausführung des Lernsystems 30 ist in Fig. 2 näher dargestellt. Danach umfasst das Lernsystem 30 als Untereinheiten (z.B. Softwaremodule) eine Nutzerdateneinheit 32, eine Interaktionserfassungseinheit 34, eine Umgebungsbedingungserfassungseinheit 36, eine Mehrfachtipp-Trainingseinheit 38, eine Einfachtipp-Trainingseinheit 40, eine Anweisungseinheit 42 und eine Lernkoordinationseinheit 44.

Die Nutzerdateneinheit 32 ist dazu ausgebildet, Nutzerdaten N (also persönliche Daten, die den Nutzer charakterisieren) zu erfassen - beispielsweise mittels einer über das Display des Smartphone 8 angezeigten Eingabemaske - und zu speichern, nämlich z.B. Alter des Nutzers, den Grad der Erfahrung des Nutzers mit Hörgeräten und den Grad der Erfahrung des Nutzers mit elektronischen Kommunikationsgeräten und digitaler Information).

Die Interaktionserfassungseinheit 34 ist dazu ausgebildet, Interaktionen des Nutzers mit dem Hörgerät 4 mittels Fingertippbewegungen (nämlich insbesondere vorgenommene Doppeltipps und Einfachtipps) zu erfassen, hinsichtlich der Häufigkeit und des Erfolgs auszuwerten und die Ergebnisse dieser Auswertung zu speichern. Beispielsweise erfasst und speichert die Interaktionserfassungseinheit 34 als Interaktionsdaten A die Anzahl der bei in einem oder mehreren vorausgegangenen Doppeltipp-Testschritten erkannten (d.h. ordnungsgemäß vorgenommenen) und nicht erkannten (d.h. fehlerhaft vorgenommenen) Doppeltipps, und die Anzahl der bei in einem oder mehreren vorausgegangenen Einfachtipp-Testschritten erkannten und nicht erkannten Einfachtipps, wobei die jeweils gespeicherte Anzahl nicht erkannter Doppel- und Einfachtipps von der Interaktionserfassungseinheit 34 auf null gesetzt wird, wenn der Nutzer eine vorgegebene Anzahl von Doppeltipps bzw. Einfachtipps erfolgreich vorgenommen hat.

Die Umgebungsbedingungserfassungseinheit 36 erfasst ein Signal-Rausch-Verhältnis Q des Messsignals M des Beschleunigungssensors 28 als Maß für die Qualität oder Verlässlichkeit des Messignals M (oder, umgekehrt ausgedrückt, als Maß für die Stärke der durch die Umgebungsbedingungen erzeugten Störungen in dem Messsignal M). Das Signal-Rausch-Verhältnis Q wird durch die Umgebungsbedingungserfassungseinheit 36 beispielsweise berechnet aus dem Verhältnis einer gemittelten Stärke vorausgegangener Beschleunigungspulse, deren Stärke einen vorgegebenen Grenzwert überschreitet (und die die Umgebungsbedingungserfassungseinheit 36 daher als Signatur von Fingertipps des Nutzers auffasst) zu einer Grundlinie des Messignals M (die beispielsweise aus einem gleitenden quadratischen Mittelwert über das gesamte Messsignal M berechnet wird).

In einer Variante des Lernsystems 30 ist die Umgebungsbedingungserfassungseinheit 36 als Teil der Bedien-App 6 implementiert und wird demnach im Betrieb des Hörsystems 2 in dem Smartphone 8 ausgeführt. In diesem Fall wird das Messignal M von dem Hörgerät 4 über die Datenübertragungsverbindung 24 an das Smartphone 8 (und damit an die Bedien-App 6) übermittelt. Alternativ hierzu ist die Umgebungsbedingungserfassungseinheit 36 in dem Audioprozessor 18 des Hörgeräts 4 implementiert. In dem letztgenannten Fall werden nur das von dem ermittelte Signal-Rausch-Verhältnis Q von dem Hörgerät 4 an die Bedien-App 6 übermittelt.

Die Mehrfachtipp-Trainingseinheit 38 ist zur Durchführung eines nachfolgend näher beschrieben Doppeltipp-Testschrittes ausgebildet. Die Einfachtipp-Trainingseinheit 40 ist zur Durchführung eines nachfolgend näher beschrieben Einfachtipp-Testschrittes ausgebildet. Die Anweisungseinheit 42 ist dazu ausgebildet, gespeicherte Anweisungen L (d.h. Lerninformation zur Information des Nutzers über die korrekte Vornahme von Doppeltipps) an den Nutzer auszugeben.

Die Lernkoordinationseinheit 44 ist schließlich dazu ausgebildet, in Abhängigkeit von den in der Nutzerdateneinheit 32 gespeicherten Nutzerdaten N, in Abhängigkeit von den in der Interaktionserfassungseinheit 34 gespeicherten Interaktionsdaten A und in Abhängigkeit von dem in der Umgebungsbedingungserfassungseinheit 36 gespeicherten Signal-Rausch-Verhältnis Q durch eine (in Fig. 1 durch gestrichelte Pfeile angedeutete) Ansteuerung der Mehrfachtipp-Trainingseinheit 38, der Einfachtipp-Trainingseinheit 38 und der Anweisungseinheit 42 einen ein- oder mehrstufigen Lernprozess zu koordinieren, durch den der Nutzer in der ordnungsgemäßen Durchführung von Doppeltipps angeleitet und trainiert wird. Die Nutzerdaten N, die Interaktionsdaten A und das Signal-Rausch-Verhältnis Q werden der Lernkoordinationseinheit 44 hierzu von der Nutzerdateneinheit 32, der Interaktionserfassungseinheit 34 bzw. der Umgebungsbedingungserfassungseinheit 36 zugeführt.

Die Lernkoordinationseinheit 44 startet den Lernprozess bei der erstmaligen Inbetriebnahme des Hörsystems 2, im Falle eines fehlerhaft durchgeführten (d.h. nicht erkannten) Doppeltipps sowie auf Anforderung des Nutzers (z.B. wenn der Nutzer in einer Nutzeroberfläche der Bedien-App 6 eine entsprechende Schaltfläche betätigt).

In einer beispielhaften Ausführung der Lernkoordinationseinheit 44 steuert diese, wenn das Alter des Nutzers ausweislich der Nutzerdaten N einen bestimmten Altersgrenzwert (von z.B. 60 Jahren) unterschreitet, der Nutzer ausweislich der Nutzerdaten N einen durchschnittliche bis hohen Grad an Erfahrung mit Hörgeräten und elektronischen Kommunikationsgeräten / digitaler Information aufweist und die Interaktionsdaten A keine Fehlversuche bei der Vornahme von Doppeltipps ausweisen, unmittelbar die Mehrfachtipp-Trainingseinheit 38 zur Durchführung des Doppeltipp-Testschritts an. Wenn hierbei der von dem Nutzer vorgenommener Doppeltipp erkannt wird, sendet die Mehrfachtipp-Trainingseinheit 38 ein positives Testresultat R an die Interaktionserfassungseinheit 34. In diesem Fall wird der Lernprozess (der hier ggf. aus einem einzigen Schritt besteht) beendet. Andernfalls meldet die Mehrfachtipp-Trainingseinheit 38 ein negatives Testresultat R an die Interaktionserfassungseinheit 34, die anhand des Testresultats R die Interaktionsdaten A aktualisiert.

Wenn eine der obigen Bedingungen nicht erfüllt ist, d.h. wenn der Nutzer den Altersgrenzwert überschreitet, einen geringen Grad an Erfahrung mit Hörgeräten oder elektronischen Kommunikationsgeräten / digitaler Information aufweist oder die Interaktionsaktionsdaten A eine von null verschiedene Anzahl von Fehlversuchen aufweist, stellt die Lernkoordinationseinheit 44 einen mehrstufigen Lernprozess zusammen, der - je nach der Anzahl der vorherigen Fehlversuche - die folgenden Schritte umfasst:
- bei keinem oder einem vorherigen Fehlversuch: Ansteuerung der Anweisungseinheit 42 zur Ausgabe einer Anweisung L an den Nutzer, gefolgt von einer (im Fehlerfall ggf. wiederholten) Ansteuerung der Mehrfachtipp-Trainingseinheit 38,
- bei mehreren vorherigen Fehlversuchen: Ansteuerung der Anweisungseinheit 42 zur Ausgabe einer Anweisung L an den Nutzer, gefolgt von einer (im Fehlerfall ggf. wiederholten) Ansteuerung der Einfachtipp-Trainingseinheit 40; wiederum gefolgt von einer (im Fehlerfall ggf. wiederholten) Ansteuerung der Mehrfachtipp-Trainingseinheit 38 - es werden hier also zuerst einzelne Tippbewegungen trainiert, bevor erneut die Doppeltippbewegung trainiert wird.

Bei einer höheren Anzahl von Fehlversuchen bricht die Lernkoordinationseinheit 44 den Lernprozess ab und bietet dem Nutzer über die Nutzeroberfläche der Bedien-App 6 den Aufbau einer Telefon- oder Videoverbindung zu einem Audiologen oder eine Terminvereinbarung zu einer Besprechung mit einem Audiologen an.

Das Signal-Rausch-Verhältnis Q wird von der Lernkoordinationseinheit 44 beispielsweise dahingehend berücksichtigt, dass die Mehrfachtipp-Trainingseinheit 38 stets mehrfach (z.B. dreifach) nacheinander angesteuert wird, wenn das Signal-Rausch-Verhältnis Q einen vorgegebenen Grenzwert unterschreitet, während die Mehrfachtipp-Trainingseinheit 38 bei gutem Signal-Rausch-Verhältnis Q nur einfach angesteuert wird.

Im Zuge des Doppeltipp-Testschritts gibt die Mehrfachtipp-Trainingseinheit 38 zunächst eine Doppeltipp-Aufforderung zur Vornahme eines Doppeltipps an den Nutzer aus. Anschließend aktiviert sie die Fingertipp-Erkennungseinheit 26. Bei Erkennung des von dem Nutzer durchgeführten Doppeltipps durch die Fingertipp-Erkennungseinheit 26 oder andernfalls nach Ablauf einer vorgegebenen Wartezeit gibt die Mehrfachtipp-Trainingseinheit 38 eine Rückmeldung an den Nutzer aus, in der sie den Nutzer über die Erkennung oder Nicht-Erkennung des Doppeltipps inform iert.

In dem hier beschriebenen Beispiel gibt die Mehrfachtipp-Trainingseinheit 38 die Doppeltipp-Aufforderung in Form eines simulierten Telefonanrufs aus, indem sie - nach Ausgabe einer entsprechenden Information über die Nutzer-Schnittstelle der Bedien-App 6 und ggf. einer Freigabe durch den Nutzer - einen Klingelton über den Hörer 14 des Hörgeräts 4 ausgibt. Um den Nutzer bei der Vornahme des Doppeltipps zu unterstützen, ist der Klingelton dabei bevorzugt derart gestaltet, dass er einen dem erwarteten Doppeltipp entsprechenden Rhythmus aufweist. Beispielsweise besteht der Klingelton aus einer wiederholten Folge von Klicklauten; z.B. jeweils zwei in einem kurzen Zeitabstand (von z.B. 0,2 sec) aufeinanderfolgende Klicklaute, gefolgt von einer längeren Pause (von z.B. 1 sec). Der kurze Zeitabstand ist dabei derart gewählt, dass er dem von dem Doppeltipp-Muster der Fingertipp-Erkennungseinheit 26 geforderten Zeitabstand zwischen den Einzeltipps eines ordnungsgemäßen Doppeltipps entspricht. Der Nutzer muss somit den Klingelton nur nachtippen, um den Doppeltipp mit der erwarteten Frequenz vorzunehmen.

Bei der Erzeugung der Rückmeldung berücksichtigt die Mehrfachtipp-Trainingseinheit 38 die Interaktionsdaten A, indem sie in Abwesenheit vorheriger Fehlversuche lediglich eine unspezifische Rückmeldung (z.B.: "Doppeltipp erkannt" oder "Doppeltipp nicht erkannt") ausgibt, während sie im Falle vorheriger Fehlversuche eine spezifische Rückmeldung zu Fehlern hinsichtlich der Tippgeschwindigkeit, der Tippstärke bzw. der Tipprichtung bzw. der angetippten Stelle des Hörgeräts 4 erzeugt (z.B.: "zu schwach getippt", "zu stark getippt", "zu schnell getippt", "zu langsam getippt", "zu hoch getippt", etc.). Anstelle einer Beschreibung des Fehlers (z.B.: "zu schwach getippt") kann die Rückmeldung auch eine Empfehlung für ein verbessertes Tippverhalten (z.B.: "Bitte stärker tippen") enthalten. Durch die differenzierte Rückmeldung werden somit die Tipp-Geschwindigkeit, die Tipp-Stärke und die Tipp-Richtung einzeln und unabhängig voneinander trainiert. Die Rückmeldung wird wahlweise in Text- oder Graphikform über die Nutzeroberfläche der Bedien-App 6 oder - vor allem bei erfolgreicher Erkennung des Doppeltipps - akustisch über den Hörer 14 des Hörinstruments 4 ausgegeben.

Optional fordert die Mehrfachtipp-Trainingseinheit 38 den Nutzer im Zuge des simulierten Telefonanrufs zur Abgabe einer Sprachprobe auf, die von der Mehrfachtipp-Trainingseinheit 38 aufgezeichnet und an den Nutzer dann über den Hörer 14 vorgespielt wird.

Weiterhin optional fordert die Mehrfachtipp-Trainingseinheit 38 den Nutzer im Zuge des simulierten Telefonanrufs auf, diesen Telefonanruf durch einen weiteren Doppeltipp zu beenden. Auch in diesem Fall erhält der Nutzer, vorzugsweise in Form eines über die Nutzeroberfläche der Bedien-App 6 ausgegebenen Textes oder einer Graphik - eine Rückmeldung, ob der weitere Doppeltipp erkannt wurde.

Im Zuge des Einfachtipp-Testschritts gibt die Einfachtipp-Trainingseinheit 40 zunächst eine Einfachtipp-Aufforderung zur Vornahme eines Einfachtipps an den Nutzer aus. Anschließend aktiviert sie die Fingertipp-Erkennungseinheit 26. Bei Erkennung des von dem Nutzer durchgeführten Einfachtipps durch die Fingertipp-Erkennungseinheit 26 oder andernfalls nach Ablauf einer vorgegebenen Wartezeit gibt die Einfachtipp-Trainingseinheit 38 eine Rückmeldung an den Nutzer aus, in der sie den Nutzer über die Erkennung oder Nicht-Erkennung des Einfachtipps informiert. Diese Rückmeldung umfasst bei Nicht-Erkennung des ordnungsgemäßen Einzeltipps vorzugsweise stets eine spezifische Angabe zu Fehlern hinsichtlich der Tippstärke bzw. der Tipprichtung bzw. der angetippten Stelle des Hörgeräts 4.

Testresultate R über erfolgreiche und gescheiterte Einfachtipps meldet auch die Einfachtipp-Trainingseinheit 40 an die Interaktionserfassungseinheit 34, die die Interaktionsdaten A entsprechend anpasst. Die Testresultate R berücksichtigt die Lernkoordinationseinheit 44 beispielsweise, indem sie die Einfachtipp-Trainingseinheit so oft ansteuert, bis der Nutzer eine vorgegebene Anzahl von erfolgreich erkannten Einzeltipps vorgenommen hat.

Die Einfachtipp-Trainingseinheit 40 berücksichtigt optional die Nutzerdaten N bei einer differenzierten Ausführung des Einzeltipp-Tests. Beispielsweise führt die Einfachtipp-Trainingseinheit 40 bei einem jungen Nutzer den Einfachtipp-Testschritt in Form eines Computerspiels durch, bei dem der Nutzer mittels Einfachtipps eine Spielfigur entlang eines vorgegebenen Wegs steuern muss, während die Einfachtipp-Trainingseinheit 40 bei einem älteren Nutzer die Einfachtipp-Aufforderung und die Rückmeldung in Textform über die Nutzeroberfläche der Bedien-App 6 ausgibt.

Auch die Anweisungseinheit 42 berücksichtigt vorzugsweise die Nutzerdaten N, indem sie je nach dem Alter und der Erfahrung des Nutzers aus verschiedenen Versionen der Anweisungen, insbesondere verschiedenen Lernvideos und/oder verschiedenen Aufbereitungsformen (z.B. Lernvideo, text-basierte Anweisung, graphik-basierte Anweisung) eine - erwartungsgemäß besonders geeignete - Version auswählt.

In weiteren Ausführungsformen der Erfindung ist die Fingertipp-Erkennungseinheit 26 dazu ausgebildet, bei Erkennung eines Doppeltipps eine Aktion des Hörgeräts 4 selbst auszulösen, z.B. einen Wechsel zwischen verschiedenen Hörprogrammen der Signalverarbeitung.

Die Erfindung wird an den vorstehend beschriebenen Ausführungsbeispielen besonders deutlich, ist gleichwohl auf diese Ausführungsbeispiele aber nicht beschränkt. Vielmehr können weitere Ausführungsformen der Erfindung von dem Fachmann aus den Ansprüchen und der vorstehenden Beschreibung abgeleitet werden.

### Bezugszeichenliste

- 2: Hörsystem
- 4: Hörgerät
- 6: Bedien-App
- 8: Smartphone
- 10: Gehäuse
- 12: Mikrofon
- 14: Hörer
- 16: Batterie
- 18: Audioprozessor
- 20: Schallkanal
- 22: Spitze
- 24: Datenübertragungsverbindung
- 26: Fingertipp-Erkennungseinheit
- 28: Beschleunigungssensor
- 30: Lernsystem
- 32: Nutzerdateneinheit
- 34: Interaktionserfassungseinheit
- 36: Umgebungsbedingungserfassungseinheit
- 38: Mehrfachtipp-Trainingseinheit
- 40: Einfachtipp-Trainingseinheit
- 42: Anweisungseinheit
- 44: Lernkoordinationseinheit

- A: Interaktionsdaten
- I: (Eingangs-)Audiosignal
- L: Anweisung
- M: Messignal
- N: Nutzerdaten
- O: (Ausgangs-)Audiosignal
- Q: Signal-Rausch-Verhältnis
- R: Testresultat
- U: Versorgungsspannung

## Patentansprüche

1. Verfahren zum Betrieb eines im oder am Ohr eines Nutzers getragenen Hörinstruments (4), wobei durch einen mehrfachen, insbesondere zweifachen Fingertipp auf das Hörinstrument (4) eine Aktion des Hörinstruments (4) oder einer mit diesem verbundenen externen Funktionseinheit (6) auslösbar ist, wobei in einem Mehrfachtipp-Testschritt
- an den Nutzer eine Mehrfachtipp-Aufforderung zur Ausführung des mehrfachen Fingertipps ausgegeben wird,
- mittels eines in dem Hörinstrument (4) integrierten Sensors, insbesondere eines Beschleunigungssensors (28) oder Gyrosensors, ein Messsignal (M) erfasst wird, das eine Signatur des ausgeführten mehrfachen Fingertipps enthält,
- das Messsignal (M) mit einem hinterlegten Mehrfachtipp-Muster für den mehrfachen Fingertipp verglichen wird, und
- an den Nutzer eine Rückmeldung ausgegeben wird, ob die in dem Messsignal (M) enthaltene Signatur dem Mehrfachtipp-Muster entspricht.

2. Verfahren nach Anspruch 1,
wobei das Mehrfachtipp-Muster jeweils einen Grenzwert oder zulässigen Bereich für
- einen zeitlichen Abstand zwischen durch den mehrfachen Fingertipp verursachten Pulsen der Signatur und
- eine Amplitude der durch den mehrfachen Fingertipp verursachten Pulse der Signatur
enthält.

3. Verfahren nach Anspruch 2,
wobei die an den Nutzer ausgegebene Rückmeldung, wenn das Messignal (M) dem hinterlegten Mehrfachtipp-Muster hinsichtlich des zeitlichen Abstands oder der Amplitude der Pulse nicht entspricht, eine Information über die Abweichung des zeitlichen Abstands bzw. der Amplitude von dem jeweils hinterlegten Grenzwert oder zulässigen Bereich enthält.

4. Verfahren nach einem der Ansprüche 1 bis 3,
wobei als Sensor ein Beschleunigungssensor (28) oder Gyrosensor herangezogen wird, dessen Messignal (M) eine auf das Hörinstrument (4) wirkende Beschleunigung bzw. Drehbewegung wiedergibt, wobei nur eine vorbestimmte Richtungskomponente der gemessenen Beschleunigung bzw. Drehbewegung mit dem Mehrfachtipp-Muster verglichen wird oder wobei das Mehrfachtipp-Muster einen Grenzwert oder zulässigen Bereich für die Richtung der durch den mehrfachen Fingertipp verursachten Beschleunigungspulse bzw. Drehbewegungspulse enthält.

5. Verfahren nach Anspruch 4,
wobei die an den Nutzer ausgegebene Rückmeldung, wenn das Messignal (M) hinsichtlich einer Richtung der Beschleunigungspulse bzw. Drehbewegungspulse dem hinterlegten Mehrfachtipp-Muster nicht entspricht, eine Information für die Abweichung der Richtung von dem jeweils hinterlegten Grenzwert oder zulässigen Bereich enthält.

6. Verfahren nach Anspruch 4 oder 5,
wobei aus der Richtung der Beschleunigungspulse bzw. Drehbewegungspulse ein Ort des mehrfachen Fingertipps relativ zu dem Hörinstrument (4) berechnet wird, und wobei die an den Nutzer ausgegebene Rückmeldung, wenn die gemessene Beschleunigung hinsichtlich der Richtung der Beschleunigungspulse dem hinterlegten Mehrfachtipp-Muster nicht entspricht, eine Information für die Abweichung des Orts des Fingertipps von einer dem Mehrfachtipp-Muster entsprechenden Sollposition enthält.

7. Verfahren nach einem der Ansprüche 1 bis 6,
wobei die durch den mehrfachen Fingertipp auszulösende Aktion in der Annahme oder Beendung eines Telefonanrufs besteht, und wobei in dem Mehrfachtipp-Testschritt die Mehrfachtipp-Aufforderung in Form einer Simulation eines Telefonanrufs erfolgt.

8. Verfahren nach einem der Ansprüche 1 bis 7,
wobei zusammen mit oder anschließend an die Mehrfachtipp-Aufforderung zur Unterstützung des Nutzers bei der Ausführung des mehrfachen Fingertipps mittels des Hörinstruments (4) ein rhythmischer Aufforderungsklang an den Nutzer ausgegeben wird, dessen Rhythmus mit der zeitlichen Abfolge einzelner erwarteter Einzeltipps innerhalb des Mehrfachtipp-Musters korreliert.

9. Verfahren nach einem der Ansprüche 1 bis 8,
wobei zusätzlich zu der Durchführung des Mehrfachtipp-Testschritts in einem Einzeltipp-Testschritt
- an den Nutzer eine Einzeltipp-Aufforderung zur Ausführung des einzelnen Fingertipps ausgegeben wird,
- mittels des in dem Hörinstrument (4) integrierten Sensors (28) das eine Signatur des ausgeführten einfachen Fingertipps enthaltene Messignal (M) erfasst und mit einem hinterlegten Einzeltipp-Muster für den einzelnen Fingertipp verglichen wird, und
- an den Nutzer eine Rückmeldung ausgegeben wird, ob die in dem Messsignal enthaltene Signatur dem Einzeltipp-Muster entspricht.

10. Verfahren nach einem der Ansprüche 1 bis 9,
wobei zusätzlich zu dem Mehrfachtipp-Testschritt ein Anweisungs-Schritt durchgeführt wird, in dem eine Anweisung (L) zur Durchführung des mehrfachen Fingertipps an den Nutzer ausgegeben wird.

11. Verfahren nach den Ansprüchen 9 und 10
wobei zusätzlich zu dem Mehrfachtipp-Testschritt ein oder mehrere weitere Hilfsschritte durchgeführt werden, die ausgewählt werden aus einer Gruppe, die den
- den Einzeltipp-Testschritt,
- den Anweisungsschritt und
- eine wiederholte Ausführung des Mehrfachtipp-Testschritts enthält, wobei in Abhängigkeit von
- persönlichen Daten (N) zu dem Nutzer und/oder
- einer vorausgegangenen Interaktion des Nutzers mit dem Hörinstrument (4), und/oder
- mindestens einer Umgebungsbedingung (Q)
eine Auswahl über die Art und Anzahl der weiteren Hilfsschritte und die Reihenfolge des Mehrfachtipp-Testschritts und der weiteren Hilfsschritte getroffen wird.

12. Verfahren nach einem der Ansprüche 1 bis 11,
wobei in Abhängigkeit von
- persönlichen Daten (N) zu dem Nutzer, und/oder
- einer vorausgegangenen Interaktion des Nutzers mit dem Hörinstrument (4), und/oder
- mindestens einer Umgebungsbedingung (Q)
die Durchführung des Mehrfachtipp-Testschrittes variiert wird.

13. Verfahren nach einem der Ansprüche 9 bis 12,
wobei das Einzeltipp-Muster hinsichtlich der Amplitude und/oder der Richtung des durch den einzelnen Fingertipp verursachten Pulses des Messsignals dem Mehrfachtipp-Muster entspricht.

14. Verfahren nach einem der Ansprüche 10 bis 13,
wobei in dem Anweisungs-Schritt in Abhängigkeit von persönlichen Daten (N) zu dem Nutzer eine Auswahl aus mehreren unterschiedlichen Varianten der Anweisung (L) getroffen wird.

15. Hörsystem (2) mit einem im oder am Ohr eines Nutzers tragbaren Hörinstrument (4), das einen Sensor (28) aufweist, wobei der Sensor (28) zur Ausgabe eines Messsignals (M) ausgebildet ist, das eine Signatur eines mehrfachen Fingertipps enthält, wenn der Nutzer einen solchen mehrfachen Fingertipp auf das Hörinstrument (4) ausführt, und wobei das Hörsystem (2) weiterhin folgendes umfasst:
- eine Fingertipp-Erkennungseinheit (26), die dazu ausgebildet ist, durch Vergleich des Messignals (M) mit einem hinterlegten Mehrfachtipp-Muster den mehrfachen Fingertipp auf das Hörinstrument (4) zu erkennen und bei Erkennung des mehrfachen Fingertipps eine Aktion des Hörinstruments (4) oder einer mit diesem verbundenen externen Funktionseinheit (6) auszulösen, und
- ein Lernsystem (30), die zur Durchführung des Verfahrens nach einem der Ansprüche 1 bis 14 eingerichtet ist.
